Europäisches Patentamt

European Patent Office

Office européen des brevets

(11) Veröffentlichungsnummer: **0 360 878 B1**

## EUROPÄISCHE PATENTSCHRIFT

(45) Veröffentlichungstag der Patentschrift: **25.11.92**

(51) Int. Cl.⁵: **G11C 8/00**, G06F 1/00

(21) Anmeldenummer: **88115724.2**

(22) Anmeldetag: **23.09.88**

(54) **Verfahren zum irreversiblen Unterbinden der Durchführung definierter Speicheroperationen in monolithisch integrierten Mikrocomputerschaltungen.**

(43) Veröffentlichungstag der Anmeldung:
**04.04.90 Patentblatt 90/14**

(45) Bekanntmachung des Hinweises auf die Patenterteilung:
**25.11.92 Patentblatt 92/48**

(84) Benannte Vertragsstaaten:
**DE FR GB IT NL SE**

(56) Entgegenhaltungen:
**EP-A- 0 127 809**

**IBM TECHNICAL DISCLOSURE BULLETIN, Band 30, Nr. 2, Juli 1987, Seiten 862-863, Armonk, New York, US; "Write protection for a non-volatile RAM"**

(73) Patentinhaber: **SIEMENS AKTIENGESELL-SCHAFT**
**Wittelsbacherplatz 2**
**W-8000 München 2(DE)**

(72) Erfinder: **Schrenk, Hartmut, Dr.**
**Fasanenweg 22**
**W-8013 Haar(DE)**

**Beschreibung**

Die Erfindung betrifft ein Verfahren zum irreversiblen Unterbinden der Durchführung definierter Speicheroperationen zumindest für Teilbereiche eines in einer monolithisch integrierten Mikrocomputerschaltung enthaltenen nichtflüchtigen Speichers unter Gewährleistung der Testbarkeit der Mikrocomputerschaltung nach dem Oberbegriff des Patentanspruches 1.

Dieses Unterbinden der Durchführung definierter Speicheroperationen wird im Folgenden durch das Gesetztsein einer Zugriffsblockade beschrieben und betrifft die Speicheroperationen Löschen, Schreiben oder von außen erkennbares Lesen entweder einzeln oder in irgendeiner Kombination, z.B. Löschen und Schreiben etc. Da alle Funktionen der integrierten Schaltkreise, auch die des Speichers, nach der Herstellung uneingeschränkt testbar sein müssen, muß die Zugriffsblockade nachträglich irreversibel aktivierbar sein. Entsprechende integrierte Schaltkreise können z.B. die in Chip-Karten eingesetzten Schaltkreise sein.

Zugriffsblockaden der gattungsgemäßen Art sind unter anderem unter Verwendung sogenannter Fusible-Links realisierbar, Schmelzsicherungen, die nach dem Testen der integrierten Schaltung gezündet werden können und somit einen weiteren Zugang zu den durch die Blockade geschützte Funktionen verhindern können. Derartige Schmelzsicherungen sind unter anderem in dem Artikel Redundancy Techniques for Dynamic RAMs von Shimohigashi et.al., erschienen in 2419 Japanese Journal of Applied Physics. Supplements Vol. 22 (1983) suppl. no. 22-1, Tokyo, Japan beschrieben. Diese Technik ist jedoch aufwendig und komplex, insbesondere, falls nacheinander mehrere unabhängige Sperrfunktionen zu aktivieren sind. Fusible-Links benötigen eine relativ große Chipfläche und zum Durchschmelzen ist ein relativ großer Strom erforderlich. Außerdem ist ein nachträgliches Überbrücken solcher Sicherungen nicht auszuschließen, was zu einem Sicherheitsrisiko führt.

Eine andere Möglichkeit, das uneingeschränkte Testen aller Funktionen einer integrierten Schaltung mit nichtflüchtigem Speicher zu gewährleisten, ist durch zusätzlich vorzusehende Testpads gegeben. Wenn diese zusätzlichen Testpads nach der Montage der integrierten Schaltung nicht mehr zugänglich sind, sind die über diese Testpads durchführbaren Operationen blockiert. Jedoch ist die Gefahr, daß diese Testpads in betrügerischer Absicht freigelegt werden, relativ groß, so daß dieses Verfahren bezüglich der Betrugssicherheit nicht empfehlenswert ist.

Unter anderem aus der EP-OS 0 128 362, der EP-OS 0 214 390 und der EP-OS 0 224 639 sind in anderem Zusammenhang Verfahren bzw. Schaltungsanordnungen zur Durchführung von Verfahren bekannt, bei denen im Rahmen einer Benutzeridentifikation Kontrolldaten, die nichtflüchtig in einer integrierten Schaltung abgelegt sind, mit extern einzugebenden Kennwortdaten verglichen werden, wobei von einem positiven Datenvergleich die weitere bestimmungsgemäße Betreibbarkeit dieser integrierten Schaltungsanordnung abhängt. Bei diesen bekannten Verfahren wird die Zugriffskontrolle erst nach dem Testen der integrierten Schaltung und nach einer eventuellen Inizialisierung dieser Schaltung aktiviert. Der sich am Ende des Produktionsprozesses unmittelbar vor dem Testen der integrierten Schaltung einstellende zufällige Zustand des programmierbaren Speichers dieser Schaltung hat hierbei keinen Einfluß auf ihre Testbarkeit. Ein jederzeit aktivierbares irreversibles Unterbinden der Durchführung definierter Speicheroperationen ist mit solchen bekannten Schaltungen nicht möglich.

Aufgabe der vorliegenden Erfindung ist das Bereitstellen eines einfachen aber sicheren Verfahrens zum irreversiblen Setzen einer Zugriffsblockade in integrierten Mikrocomputerschaltungen, die einen nichtflüchtigen Speicher enthalten, das mit geringer Chipfläche und ohne große Ströme realisierbar ist, wobei nicht durch mechanische Einflußnahme die Zugriffsblockade aufgehoben werden kann und wobei die Testbarkeit der Mikrocomputerschaltung voll gewährleistet bleibt.

Diese Aufgabe wird durch ein Verfahren nach dem Patentanspruch 1 gelöst. Sinnvolle Ausgestaltungen des Verfahrens sind Gegenstand von Unteransprüchen.

Die oben beschriebenen bekannten Zugriffskontrollverfahren, bei denen die Daten eines Kennwortes mit Kontrolldaten verglichen werden und ein positiver Datenvergleich einen Zugriff ermöglicht, eignen sich prinzipiell nicht zum irreversiblen Unterbinden der Durchführung definierter Speicheroperationen gemäß der Aufgabe der hier beschriebenen Erfindung, weil bei diesen bekannten Zugriffskontrollverfahren die Daten des Kennwortes nicht jederzeit verfügbar sind, sondern von außen eingegeben werden müssen. Einem erfindungsgemäßen Verfahren liegt zugrunde, daß das Kennwort in einem Kennwortbereich eines in der zu schützenden integrierten Schaltung enthaltenen nichtflüchtigen Speichers gespeichert werden kann und daß ein positiver Datenvergleich eine Zugriffsblockade setzt.

Da sowohl die Daten des Kennwortes als auch die Kontrolldaten in Speicherzellen gespeichert werden, die auf dem gleichen Chip enthalten sind, kann der während des Produktionsprozesses eines solchen Chips sich einstellende reativ zufällige Zustand dieser Speicherzellen zu unerwünschtem Setzen der von dem Datenvergleich der Daten des Kennwortes mit den Kontrolldaten abhängigen Zugriffsblockade führen. In diesem Fall wäre ein im Verlauf des Produktionsprozesses übliches Testen der Chipfunktionen für den blockierten Bereich nicht möglich und dieser Chip müßte verworfen werden. Deshalb sieht ein erfindungsgemäßes Verfahren vor, daß bei jedem, durch einen Start-Reset eingeleiteten Zugriff auf die integrierte Schaltung eventuell gesetzte Zugriffsblockaden rückgesetzt werden.

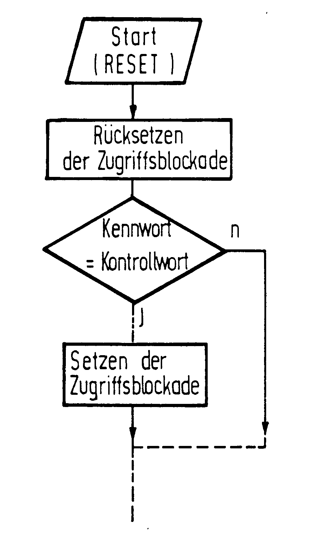

Nachstehend wird das erfindungsgemäße Verfahren anhand der einen Programmablaufplan darstellenden Figur 1 beschrieben.

Nach dem Einschalten der monolithisch integrierten Mikrocomputer-Schaltung wird mit dem Einschalt-Reset unter anderem die Zugriffsblockade, die die Durchführung von für die Testphase der Mikrocomputer-Schaltung erforderlichen definierten Speicheroperationen unterbindet, zurückgesetzt. Dann wird ein eventuell im Kennwortspeicher eines nichtflüchtigen Speichers abgelegtes Kennwort mit unveränderbar an eine anderen Stelle der Mikrocomputer-Schaltung, beispielsweise im Masken-ROM, abgespeicherten Kontrolldaten verglichen. Ein negativer Datenvergleich ermöglicht hierbei den freien Zugriff auf die Speicher des Mikrocomputers und somit die Durchführung definierter, beispielsweise in einem Testprogramm vorgesehener Speicheroperationen. Der löschbare nichtflüchtige Speicher kann hierbei insbesondere uneingeschränkt löschbar sein. Bei einem positiven Datenvergleich wird die entsprechende Zugriffsblockade gesetzt, so daß die Speicheroperationen nur noch eingeschränkt durchführbar sind.

Um zu verhindern, daß infolge der Veränderung eines Teiles des Kennwortes bzw. durch unkorrektes Lesen eines Teiles dieses Kennwortes eine nicht vorgesehene Durchführung definierter Speicheroperationen ermöglicht wird, kann ein Vergleich des Kennwortes mit den Kontrolldaten bereits als positiv gewertet werden, wenn mindestens eine bestimmte Anzahl der das Kennwort bildenden Datenbits mit den entsprechenden Kontrolldatenbits übereinstimmt. Bei untergeordneten Testphasen, wenn das Gelöschtsein des Kennwortbereiches des nichtflüchtigen Speichers beispielsweise durch eine vorhergehende Testphase gewährleistet ist, kann selbst die Übereinstimmung eines einzigen Kennwortbits mit einem Kontrollbit als positiver Datenvergleich gewertet werden und die entsprechende Zugriffskontrolle gesetzt werden.

Es können auch mehrere, nach erfindungsgemäßen Verfahren setzbare Zugriffsblockaden in einer integrierten Mikrocomputerschaltung vorgesehen sein. Diese können dann hierarchisch gegliedert sein, aber auch voneinander unabhängig setzbar sein. Beispielsweise kann eine Zugriffsblockade erst gesetzt werden, wenn vorher eine andere gesetzt worden ist, oder wenn vorher eine andere gesetzt worden ist und außerdem eine bestimmte weitere Zugriffsblockade noch nicht gesetzt ist. Außerdem können nach dem erfindungsgemäßen Verfahren setzbare Zugriffsblockaden zusammen mit weiteren durch andere bekannte Verfahren realisierte Zugriffsblockaden vorgesehen sein, und zwar beispielsweise zwei oder mehrere nach verschiedenen Verfahren realisierte Zugriffsblockaden gleichzeitig, die somit eine ODER-Verknüpfung realisieren oder auch beispielsweise derart, daß unterschiedliche Verfahren zur Zugriffsblockade für hierarchisch unterschiedlich eingestufte Kontrollsysteme vorgesehen sind. Eine solche Koppelung von nach erfindungsgemäßen Verfahren setzbaren Zugriffsblockaden mit nach anderen Verfahren setzbaren Zugriffsblockaden erhöht auch die Sicherheit vor unerlaubten Manipulationen zum Umgehen einer gesetzten Zugriffsblockade.

Wenn eine einen nichtflüchtigen Speicher enthaltende monolithisch integrierte Mikrocomputerschaltung gefertigt wird, stellt sich in diesem nichtflüchtigen Speicher ein bestimmter Ladungszustand ein, der ohne vorheriges aktives Schreiben oder Löschen das Lesen bestimmter, zufälliger Speicherinhalte ermöglicht. Am häufigsten liegt ein solcher nichtflüchtiger Speicher unmittelbar nach der Fertigung auf Low-Potential, d.h., die in den einzelnen Speicherzellen befindliche geringe Ladungsmenge führt zu einem Potential, das eindeutig unter der üblichen Lesespannung liegt. Bei EE-PROMs ist dies aus Sicherheitsgründen der gesperrte, geschriebene Zustand, da das Einbringen von Ladung schwieriger ist als das Abführen. In selteneren Fällen kommt es vor, daß beispielsweise durch Ionen oder durch Strahlung die einzelnen Speicherzellen zu sehr aufgeladen sind, daß die Lesespannung unter der Zellenspannung liegt und somit High-Potential gelesen wird. Üblicherweise unterscheiden sich die Ladungsinhalte der einzelnen Speicherzellen gegen Ende der Fertigung der monolithisch integrierten Schaltung kaum voneinander. Liegen die Speicherzellen des nichtflüchtigen Speichers auf einem Potential, das in etwa der Lesespannung entspricht, so ermitteln übliche Lesedecoder oft bei jedem Bit einen Polaritätswechsel, also ein Schachbrettmuster wie 10101010... .

Besonders günstige erfindungsgemäße Verfahren zum irreversiblen Unterbinden der Durchführung definierter Speicheroperationen sehen ein Kennwort vor, das nicht aus Bits der gleichen Polarität wie 111... oder 000... und nicht aus Bits mit ausschließlich kontinuierlichen Polaritätswechseln zwischen benachbarten Bitstellen besteht, sondern ein Kennwort, das ein nichtkontinuierlich wechselndes Bitmuster aufweist. Optimal ist ein Kennwort mit nichtkontinuierlich wechselndem Bitmuster, das die gleiche oder zumindest eine ähnliche Anzahl von Einsen und Nullen enthält. Als Beispiele vorteilhafter acht Bit langer Kennwörter wäre unter anderem die Hexadezimalzahl $33_{Hex}$ bzw. 00110011 zu nennen oder Bitkombinationen wie 00010111, 10010110, 10111000, 00111100, 11000110, 10001101 etc.

Wie das Setzen von Zugriffsblockaden für bestimmte Speicheroperationen physikalisch durchgeführt werden kann, beispielsweise eine Lösch- oder Schreibsperre durch Begrenzung der Spannung auf der Auswahlleitung der Flotox-Zelle bei EE-PROMs, ist dem Fachmann geläufig und unter anderem aus den oben angegebenen Patentschriften bekannt.

**Patentansprüche**

1. Verfahren zum irreversiblen Unterbinden der Duchführung definierter Speicheroperationen wie Löschen, Schreiben oder Lesen zumindest für Teilbereiche eines in einer monolitisch integrierten Mikrocomputerschaltung enthaltenen nichtflüchtigen Speichers, wobei die Durchführbarkeit der Speicheroperationen in Abhängigkeit vom Ergebnis eines Datenvergleiches von den Daten eines Kennwortes mit in der monolithisch integrierten Mikrocomputerschaltung verfügbaren Kontrolldaten entweder ermöglicht wird oder durch Setzen einer Zugriffsblockade unterbunden wird und wobei die Testbarkeit der Mikrocomputerschaltung voll gewährleistet ist,
    **dadurch gekennzeichnet,**
    daß bei jeder Inbetriebnahme der integrierten Mikrocomputerschaltung eine evtl. gesetzte Zugriffsblockade rückgesetzt wird, daß die Daten des Kennwortes in einem Kennwortbereich des nichtflüchtigen Speichers der integrierten Mikrocomputerschaltung speicherbar sind, daß der Kennwortbereich des nichtflüchtigen Speichers nur während eines einzigen, durch einen Start-Reset eingeleiteten Zugriffs auf die integrierte Mikrocomputerschaltung mit dem die Zugriffsblockade für die Speicheroperation setzenden Kennwort programmiert wird und daraufhin die Speicherfunktionen Schreiben und Löschen für diesen Kennwortbereich des nichtflüchtigen Speichers durch irgendeine Zugriffsblockade unterbunden sind.

2. Verfahren nach Anspruch 1,
    **dadurch gekennzeichnet,**
    daß die Durchführbarkeit der Speicheroperationen dann unterbunden ist, wenn mindestens eine bestimmte Anzahl der das Kennwort bildenden im Kennwortbereich des nichtflüchtigen Speichers gespeicherten Daten-Bit mit den entsprechenden Kontrolldaten-Bit übereinstimmt.

3. Verfahren nach Anspruch 1 oder 2,
    **dadurch gekennzeichnet,**
    daß das die Zugriffsblockade setzende Kennwort aus Bits mit unterschiedlichen logischen Zuständen besteht.

4. Verfahren nach Anspruch 3,
    **dadurch gekennzeichnet,**
    daß innerhalb des die Zugriffsblockade setzenden Kennworts kein ausschließlich kontinuierlicher Wechsel des logischen Zustandes zwischen benachbarten Bitstellen vorliegt.

5. Verfahren nach einem der vorhergehenden Ansprüche,
    **dadurch gekennzeichnet,**
    daß mehrere Kennwortbereiche im nichtflüchtigen Speicher vorgesehen sind, die das Setzen mehrerer Zugriffsblockaden ermöglichen.

6. Verfahren nach Anspruch 5,
    **dadurch gekennzeichnet,**
    daß die einzelnen Kennworte unabhängig von irgendwelchen Bedingungen ein einziges Mal in die entsprechenden Speicherbereiche geschrieben werden können.

7. Verfahren nach Anspruch 5,
    **dadurch gekennzeichnet,**
    daß das Einschreiben eines Kennwortes in den entsprechenden Kennwortspeicher nur möglich ist, wenn in einem anderen Kennwortspeicher bereits ein Kennwort eingeschrieben ist.

8. Verfahren nach einem der Anprüche 1 bis 7,
    **dadurch gekennzeichnet,**
    daß unterschiedliche Kennworte für das Setzen von Zugriffsblokkaden vorgesehen sind, wobei das Kennwort die Art bzw. den betreffenden Speicherbereich der Zugriffsblockade definiert.

9. Verfahren nach einem der Ansprüche 1 bis 8,
    **dadurch gekennzeichnet,**
    daß der Dateninhalt mindestens eines Teilbereiches des nichtflüchtigen Speichers gelöscht wird, wenn eine Zugriffskontrolle nicht gesetzt ist.

10. Verfahren nach Anspruch 9,
    **dadurch gekennzeichnet,**
    daß der Dateninhalt mindestens eines Teilbereiches des nichtflüchtigen Speichers gelöscht wird, wenn eine erste Zugriffskontrolle nicht gesetzt ist, aber nur gelöscht werden kann, wenn auch eine zweite Zugriffskontrolle nicht gesetzt ist.

11. Verfahren nach einem der Ansprüche 9 oder 10,

**dadurch gekennzeichnet,**

daß nach dem aufgrund einer nichtgesetzten Zugriffskontrolle vorgenommenen Löschen des Dateninhaltes mindestens eines Teilbereiches des nichtflüchtigen Speichers die weitere Betreibbarkeit dieses Speicherbereiches vom positiven Vergleichsergebnis einzugebender Testcodedaten mit nicht löschbar in der integrierten Schaltung gespeicherten Daten abhängt.

12. Verfahren nach einem der vorhergehenden Ansprüche,

**dadurch gekennzeichnet,**

daß das die Zugriffsblockade setzende Kennwort aus gleich vielen Bits beider Polaritäten besteht, wobei kein ausschließlich kontinuierlicher Polaritätswechsel zwischen benachbarten Bitstellen besteht.

## Claims

1. Method for irreversibly blocking the execution of particular memory operations such as erasing, writing or reading, at least for subareas of a non-volatile memory contained in a monolithically integrated microcomputer circuit, the capability of executing the memory operations either being made possible or blocked by setting an access blockade in dependence on the result of a data comparison of the data of a code word with control data available in the monolithically integrated microcomputer circuit, and the capability of testing the microcomputer circuit being fully ensured, characterised in that, each time the integrated microcomputer circuit is put into operation, any set access blockade is reset, in that the data of the code word are able to be stored in a code-word area of the non-volatile memory of the integrated microcomputer circuit, in that the code-word area of the non-volatile memory is programmed with the code word setting the access blockade for the memory operation just during a single access to the integrated microcomputer circuit, initiated by a start reset, and thereafter the memory functions of writing and erasing are blocked for this code-word area of the non-volatile memory by some access blockade or other.

2. Method according to Claim 1, characterised in that the capability of executing the memory operations is blocked if at least a certain number of the data bits forming the code word and stored in the code-word area of the non-volatile memory coincides with the corresponding control-data bits.

3. Method according to Claim 1 or 2, characterised in that the code word setting the access blockade comprises bits having different logical states.

4. Method according to Claim 3, characterised in that within the code word setting the access blockade there is no exclusively continuous change of the logical state between neighbouring bit positions.

5. Method according to one of the preceding claims, characterised in that in the non-volatile memory there is provided a plurality of code-word areas, which make possible the setting of a plurality of access blockades.

6. Method according to Claim 5, characterised in that, irrespective of any conditions, the individual code words can be written a single time to the corresponding memory areas.

7. Method according to Claim 5, characterised in that the writing of a code word to the corresponding code-word memory is possible only if a code word has already been written to another code-word memory.

8. Method according to one of Claims 1 to 7, characterised in that different code words are provided for the setting of access blockades, the code word defining the type or the memory area concerned of the access blockade.

9. Method according to one of Claims 1 to 8, characterised in that the data content of at least one subarea of the non-volatile memory is erased if an access control is not set.

10. Method according to Claim 9, characterised in that the data content of at least one subarea of the non-volatile memory is erased if a first access control is not set, but can only be erased if also a second access control is not set.

11. Method according to one of Claims 9 or 10, characterised in that after the erasing of the data contents of at least one subarea of the non-volatile memory, performed on the basis of a non-set access control, the further capability of this memory area to operate depends on the positive comparison result of test code data to be input with non-erasable data stored in the integrated circuit.

**12.** Method according to one of the preceding claims, characterised in that the code word setting the access blockade comprises the same number of bits of both polarities, there being no exclusively continuous polarity change between neighbouring bit positions.

**Revendications**

**1.** Procédé de blocage irréversible de l'exécution d'opérations définies de mémoire telles que l'effacement, l'enregistrement ou la lecture au moins pour des zones partielles d'une mémoire non volatile contenue dans un circuit à micro-ordinateur intégrés de façon monolithique, et selon lequel la capacité d'exécution des opérations de mémoire est, soit permise en fonction du résultat d'une comparaison des données d'un mot caractéristique à des données de commande disponibles dans le circuit à microordinateur intégrés de façon monolithique, soit bloquée par positionnement de l'unité de blocage d'accès, et selon lequel la capacité de test du circuit à micro-ordinateur est entièrement garantie,
caractérisé par le fait que, lors de chaque mise en service du circuit à micro-ordinateur intégré, une unité de blocage d'accès éventuellement positionnée est ramenée à l'état initial, que les données du mot caractéristique peuvent être mémorisées dans une zone du mot caractéristique de la mémoire non volatile du circuit à micro-ordinateur intégré, que la zone du mot caractéristique dans la mémoire non volatile est programmée uniquement pendant un seul accès, déclenché par une remise à l'état initial pour le démarrage, au circuit à micro-ordinateur intégré, avec le mot caractéristique positionnant l'unité de blocage d'accès pour l'opération de mémoire, et qu'en outre les fonctions de mémoire, enregistrement et effacement sont bloquées pour cette zone du mot caractéristique de la mémoire non volatile, par une quelconque unité de blocage d'accès.

**2.** Procédé suivant la revendication 1, caractérisé par le fait que la capacité d'exécution des opérations de mémoire est bloquée lorsqu'au moins un nombre déterminé des bits de données constituant le mot caractéristique et mémorisés dans la zone du mot caractéristique de la mémoire non volatile coïncide avec les bits correspondants des données de contrôle.

**3.** Procédé suivant la revendication 1 ou 2, caractérisé par le fait que le mot caractéristique qui positionne l'unité de blocage d'accès, est constitué par des bits possédant des états logiques différents.

**4.** Procédé suivant la revendication 3, caractérisé par le fait que dans le mot caractéristique positionnant l'unité de blocage d'accès, il n'existe aucune alternance exclusivement continue de l'état logique entre des positions binaires voisines.

**5.** Procédé suivant l'une des revendications précédentes, caractérisé par le fait que dans la mémoire non volatile il est prévu plusieurs zones de mots caractéristiques qui permettent le positionnement de plusieurs unités de blocage d'accès.

**6.** Procédé suivant la revendication 5, caractérisé par le fait que les différents mots caractéristiques peuvent être enregistrés une seule fois dans les zones de mémoire correspondantes indépendamment de conditions quelconques.

**7.** Procédé suivant la revendication 5, caractérisé par le fait que l'enregistrement d'un mot caractéristique dans la mémoire correspondante de mots caractéristiques n'est possible que lorsqu'un mot caractéristique est déjà enregistré dans une autre mémoire de mots caractéristiques.

**8.** Procédé suivant l'une des revendications 1 à 7, caractérisé par le fait que des mots caractéristiques différents sont prévus pour le positionnement d'unités de blocage d'accès, le mot caractéristique définissant le type ou la zone de mémoire considérée d'une unité de blocage d'accès.

**9.** Procédé suivant l'une des revendications 1 à 8, caractérisé par le fait que le contenu de données d'au moins une zone partielle de la mémoire non volatile est effacé lorsqu'un contrôle d'accès n'est pas positionné.

**10.** Procédé suivant la revendication 9, caractérisé par le fait que le contenu de données d'au moins une zone partielle de la mémoire non volatile est effacé lorsqu'un premier contrôle d'accès n'est pas positionné, mais peut être seulement effacé, même si un second contrôle d'accès n'est pas positionné.

**11.** Procédé suivant l'une des revendications 9 ou 10, caractérisé par le fait qu'après l'effacement du contenu de données, réalisé sur la base d'un contrôle d'accès non positionné, d'au moins une zone partielle de la mémoire non volatile, la poursuite de la capacité de commande de cette zone de mémoire dépend du résultat positif de la comparaison de données de code de test devant être introduites avec des données mémorisées d'une manière non effaçable dans le circuit intégré.

12. Procédé suivant l'une des revendications précédentes, caractérisé par le fait que le mot caractéristique qui positionne l'unité de blocage d'accès, est constitué par des nombres identiques de bits des deux polarités, aucune alternance de polarité exclusivement continue n'existant entre des positions binaires voisines.

Start
(RESET)

Rücksetzen
der Zugriffsblockade

Kennwort
= Kontrollwort

n

J

Setzen der
Zugriffsblockade